Europäisches Patentamt

European Patent Office

Office européen des brevets

(11) Veröffentlichungsnummer: **0 114 322**
A2

# (12) EUROPÄISCHE PATENTANMELDUNG

(21) Anmeldenummer: 83112711.3

(22) Anmeldetag: 16.12.83

(51) Int. Cl.³: **H 04 L 25/32**
**H 04 B 9/00**

(30) Priorität: 20.12.82 DE 3247120

(43) Veröffentlichungstag der Anmeldung:
01.08.84 Patentblatt 84/31

(84) Benannte Vertragsstaaten:
AT BE CH FR GB IT LI NL SE

(71) Anmelder: SIEMENS AKTIENGESELLSCHAFT
Berlin und München Wittelsbacherplatz 2
D-8000 München 2(DE)

(72) Erfinder: Görne, Jan, Dipl.-Ing.
Heinrich-Vogl-Strasse 8
D-8000 München 71(DE)

(72) Erfinder: Toussaint, Hans-Norbert, Dr. Ing.
Karlsbergstrasse 41
D-8000 München 71(DE)

(54) Verfahren und Schaltungsanordnung zur Umsetzung eines zwischen zwei Pegeln wechselnden Binärsignals in ein Pulscodesignal, das Datenimpulse und Erneuerungsimpulse aufweist.

(57) Mit Hilfe eines Verzögerungsgliedes (2) und eines EX-OR-Gliedes (5) wird aus dem Binärsignal beim Auftreten einer Pegeländerung ein Sperrsignal gewonnen, das einen frei schwingenden Erneuerungsimpulsgenerator (8) ausgangsseitig beim Auftreten von Pegeländerungen im Binärsignal sperrt, so daß die Impulsaussendung durch Datenimpulsgeneratoren (10a, 10b), die durch die an einem Abgriff (9) des Verzögerungsgliedes (2) auftretenden Pegeländerungen des Binärsignals jeweils zur Abgabe eines zeitlich gegenüber einer Pegeländerung versetzten Datenimpulses aktiviert werden, von den Erneuerungsimpulsen ungestört erfolgen kann. Die Erneuerungsimpulse können einem Datenimpuls aber zu beliebigen Zeitpunkten innerhalb einer maximalen Zeitspanne, die durch die Folgefrequenz der Erneuerungsimpulse bestimmt wird, folgen, da keine zeitliche Synchronisierung der Erneuerungsimpulse auf einen voraufgehenden Datenimpuls vorgesehen ist.

0114322

SIEMENS AKTIENGESELLSCHAFT
Berlin und München

Unser Zeichen
VPA 82 P 2082 E

**Verfahren und Schaltungsanordnung zur Umsetzung eines zwischen zwei Pegeln wechselnden Binärsignals in ein Pulscodesignal, das Datenimpulse und Erneuerungsimpulse aufweist.**

Die Erfindung bezieht sich auf ein Verfahren und eine Schaltungsanordnung zur Umsetzung eines zwischen einem ersten und einem zweiten Pegel wechselnden Binärsignals in ein Pulscodesignal, das einen Datenimpuls mit einer ersten Polarität aufweist, wenn das Binärsignal von dem ersten zum zweiten Pegel wechselt und einen Datenimpuls mit einer zweiten Polarität, wenn sich das Binärsignal vom zweiten zum ersten Pegel ändert, sowie Erneuerungsimpulse zwischen zwei Datenimpulsen, jeweils mit der Polarität des zuletzt aufgetretenen Datenimpulses.

Ein solches Verfahren und eine solche Schaltungsanordnung ist aus der DE-PS 26 48 940 bekannt. Dort tritt ein Erneuerungsimpuls zwischen zwei Datenimpulsen dann auf, wenn seit einem zuletzt ausgesandten Datenimpuls oder Erneuerungsimpuls eine bestimmte definierte Zeitspanne verstrichen ist, ohne daß ein weiterer Datenimpuls ausgesandt wurde. Die Erneuerungsimpulse sind also bei diesem bekannten Verfahren zeitlich auf einen vorausgehenden Datenimpuls synchronisiert. Ist bei diesem Verfahren bzw. dieser Schaltungsanordnung die Erzeugung eines Erneuerungsimpulses durch ein Zeitglied-Ausgangssignal bereits eingeleitet, und tritt zu diesem Zeitpunkt eine Pegeländerung im Binärsignal auf, so kann es zu einer unerwünschten Verschiebung der Vorderflanke des Datenimpulses kommen, der diese Pegeländerung repräsentiert, weil das Ausgangssignal des Zeitgliedes, das die seit der Aussendung

Rt 1 Obh / 16. Dez. 1982

0114322

eines zuletzt ausgesandten Daten- oder Erneuerungsimpulses verstrichene Zeitspanne zwecks Auslösung eines Erneuerungsimpulses überwacht, jeweils bei der Aktivierung eines der beiden dort verwendeten Impulsgeneratoren den jeweils anderen Impulsgenerator sperrt und gerade dieser den neuen Datenimpuls erzeugen soll.

Aufgabe vorliegender Erfindung ist es daher, ein Verfahren und eine Schaltungsanordnung der eingangs genannten Art zu schaffen, bei der störende Koinzidenzen zwischen dem Auftreten eines Erneuerungsimpulses und eines Datenimpulses sicher ausgeschlossen sind.

Erfindungsgemäß ergibt sich die Lösung dieser Aufgabe dadurch, daß die Erneuerungsimpulse unabhängig von den Pegeländerungen des Binärsignals mit einer bestimmten Pulsfolgefrequenz erzeugt werden, daß die einzelnen Datenimpulse jeweils gegenüber dem Zeitpunkt des Auftretens einer Pegeländerung im Binärsignal um die gleiche Zeitspanne verzögert erzeugt werden, und daß von jeder Pegeländerung des Binärsignals ein mit dem Zeitpunkt der Pegeländerung beginnendes Sperrsignal zur ausgangsseitigen Verriegelung eines Erneuerungsimpulsgenerators für eine vorbestimmte Dauer abgeleitet wird.

Auf diese Weise wird also vorteilhaft ein Pulscodesignal gebildet, bei dem sichergestellt ist, daß innerhalb einer maximalen Zeitspanne seit dem Auftreten eines Datenimpulses ein weiterer Impuls folgt, der entweder wiederum ein Datenimpuls sein kann, oder ein Erneuerungsimpuls ist. Der Erneuerungsimpuls kann innerhalb der Zeitspanne jedoch zu beliebigen Zeitpunkten auftreten, da die Erzeugung der Erneuerungsimpulse von dem Auftreten der Datenimpulse vollkommen entkoppelt ist. Mit anderen Worten, das Pulscodesignal besteht aus einer Folge von Erneuerungsimpulsen, die unabhängig von der zeitlichen Lage

0114322

der Datenimpulse ist. Lediglich die Polarität der Erneuerungsimpulse orientiert sich jeweils an dem letzten Datenimpuls, sie wechselt also mit der Polarität der Datenimpulse. Bei einer Koinzidenz von Erneuerungsimpuls und Datenimpuls wird der betreffende Erneuerungsimpuls störungsfrei unterdrückt.

In weiterer Ausgestaltung der Erfindung ist vorgesehen, daß ein EX-OR-Glied mit einem ersten Eingang an den Eingang und mit einem zweiten Eingang an den Ausgang eines von dem Binärsignal beaufschlagten Verzögerungsgliedes angeschlossen ist, und daß das Ausgangssignal des EX-OR-Gliedes als Sperrsignal verwendet wird.

Durch diese Ausbildung der Schaltungsanordnung wird das Sperrsignal zur ausgangsseitigen Verriegelung des Erneuerungsimpulsgenerators auf eine besonders elegante Weise gewonnen, wobei die Verzögerungswirkung des Verzögerungsgliedes die zeitliche Länge des Sperrsignals bestimmt. Am Ausgang des Verzögerungsgliedes bleibt nämlich der bisher vorhandene Pegel des Binärsignals so lang bei einer Pegeländerung des Binärsignals erhalten, bis der neue Pegel des Binärsignals um die Verzögerungszeit des Verzögerungsgliedes verzögert am Ausgang des Verzögerungsgliedes erscheint. Bei einer am Eingang des Verzögerungsgliedes auftretenden Pegeländerung des Binärsignales sind am Eingang und am Ausgang des Verzögerungsgliedes ungleiche Pegel vorhanden. Dieser Ungleichstand wird von dem EX-OR-Glied ausgewertet, wenn der eine Pegel der logischen Null und der andere Pegel des Binärsignals der logischen Eins zugeordnet wird. Für die Zeitdauer ungleicher Pegel am Eingang und Ausgang des Verzögerungsgliedes gibt daher das EX-OR-Glied ein Ausgangssignal ab, das zur ausgangsseitigen Verriegelung des Erneuerungsimpulsgenerators dient.

0114322

Ferner kann im Rahmen vorliegender Erfindung vorgesehen sein, daß zwei zur Erzeugung der Datenimpulse vorgesehene Impulsgeneratoren eingangsseitig mit einem Abgriff des Verzögerungsgliedes verbunden sind.

Hierdurch wird auf einfache Weise eine zeitliche Verzögerung der Datenimpulserzeugung gegenüber dem Sperrsignal bewirkt, so daß die ausgangsseitige Verriegelung des Erneuerungsimpulsgenerators sicher vor der Erzeugung eines Datenimpulses erfolgt, da das EX-OR-Glied das Sperrsignal abgibt, bevor einer der Datenimpulsgeneratoren zur Abgabe eines Datenimpulses aktiviert wird.

Schließlich kann noch weiter vorgesehen sein, daß das Verzögerungsglied über ein Negationsglied von dem Binärsignal gespeist ist, daß der Erneuerungsimpulsgenerator zusammen mit dem Ausgang des einen Impulsgenerators an ein OR-Glied und zusammen mit dem Ausgang des anderen Impulsgenerators an ein NOR-Glied angeschlossen ist, und daß der Ausgang des Verzögerungsgliedes mit dem Ausgang des OR-Gliedes an ein NAND-Glied und mit dem Ausgang des NOR-Gliedes an ein weiteres NOR-Glied angeschlossen ist, und daß das NAND-Glied und das weitere NOR-Glied Steuerschaltungen für eine strahlungsemittierende Diode sind.

Auf diese Weise ist es vorteilhaft möglich, die von den Datenimpulsgeneratoren bei jeder Pegeländerung des Binärsignales zeitlich verzögert abgegebenen Datenimpulse und die vom Erneuerungsimpulsgenerator abgegebenen Erneuerungsimpulse mit Hilfe logischer Verknüpfungsglieder zusammen mit den jeweiligen Pegeln des Binärsignales so zu verarbeiten, daß bei den entsprechenden Pegeländerungen jeweils entsprechende Polaritätswechsel bei den Daten- und Erneuerungsimpulsen auftreten.

Ein Ausführungsbeispiel der Erfindung wird nachfolgend anhand eines in einer Figur dargestellten Schaltbildes noch näher erläutert.

An einem Eingang E der dargestellten Schaltungsanordnung tritt das zwischen zwei Pegeln wechselnde Binärsignal auf. Von dort gelangt es über ein Negationsglied 1 an den Eingang 3 eines Verzögerungsgliedes 2. Am Ausgang 4 des Verzögerungsgliedes 2 tritt daher eine durch das Negationsglied 1 invertierte Pegeländerung des Binärsignales erst mit einer zeitlichen Verzögerung auf, die durch die Verzögerungszeit des Verzögerungsgliedes 2 bestimmt wird. Eingang 3 und Ausgang 4 des Verzögerungsgliedes 2 sind jeweils an einen Eingang eines EX-OR-Gliedes 5 angeschlossen. Dies bedeutet, daß beim Auftreten einer Pegeländerung am Eingang des Verzögerungsgliedes 2, bis zum Ablauf der Verzögerungszeit des Verzögerungsgliedes 2, am Ausgang 4 des Verzögerungsgliedes 2 noch der zuvor am Eingang 3 des Verzögerungsgliedes 2 vorhandene Pegel aufrechterhalten bleibt.

Während der Verzögerungszeit des Verzögerungsgliedes 2 liegen daher den Eingängen des EX-OR-Gliedes 5 bei einem Auftreten einer Pegeländerung am Eingang E unterschiedliche Pegel an. Ordnet man den beiden Pegelzuständen des Binärsignales die logische Eins und die logische Null zu, so gibt das EX-OR-Glied 5 vom Auftreten einer Pegeländerung am Eingang 3 des Verzögerungsgliedes 2 für die Dauer der Verzögerungszeit ein Ausgangssignal ab (die logische Eins). Dieses Signal wird durch das Negationsglied 6 als logische Null an den einen Eingang eines AND-Gliedes 7 gelegt, was zur Sperrung des AND-Gliedes 7 führt.

An den zweiten Eingang des AND-Gliedes 7 ist der Ausgang eines Erneuerungsimpulsgenerators 8 angeschlossen. Dieser Erneuerungsimpulsgenerator 8 ist so ausgebildet, daß er in

0114322

regelmäßigen Zeitabständen ausgangsseitig einen Erneuerungsimpuls abgibt, der jeweils die logische Eins repräsentiert.

An einen Abgriff 9 des Verzögerungsgliedes 2 sind die Eingänge von Datenimpulsgeneratoren 10a und 10b angeschlossen.
Diese Datenimpulsgeneratoren sind so ausgebildet, daß sie
bei jeder am Punkt 9 auftretenden Pegeländerung des Binärsignales abwechselnd einen Daten-impuls erzeugen, der ebenfalls als logische Eins gewertet wird.

Die von den Datenimpulsgeneratoren 10a und 10b erzeugten
Datenimpulse gelangen einerseits an einen Eingang eines
OR-Gliedes 11 und andererseits an einen Eingang eines NOR-
Gliedes 12. Da der Ausgang des AND-Gliedes 7, der mit weiteren Eingängen des OR-Gliedes 11 und des NOR-Gliedes 12
verbunden ist, die logische Null aufweist, wenn eine Pegeländerung des Binärsignals eine Sperrung des AND-Gliedes 7 bewirkt, ist für die Dauer eines Datenimpulses am
Ausgang des Gliedes 11 die logische Eins und am Ausgang
des Gliedes 12 die logische Null vorhanden.

Beide Eingänge eines NAND-Gliedes 13, die einerseits mit
dem Ausgang 4 des Verzögerungsgliedes 2, andererseits mit
dem Ausgang des OR-Gliedes 11 verbunden sind, weisen daher während eines Daten-impulses die logische Eins auf,
wenn der vom Ausgangspegel des Gliedes 2 beaufschlagte
Eingang 15 den neuen, z.B. ersten Pegel des invertierten
Binärsignales nach einem Wechsel des Binärsignales vom
ersten zum zweiten Pegel führt. Ausgangsseitig des Gliedes 13 ist also während der Dauer eines Datenimpulses die
logische Null vorhanden, wenn am Eingang 15 dieses Gliedes der erste Pegel, also die logische Eins wirksam ist.

An den beiden Eingängen eines weiteren NOR-Gliedes 14 liegen zu derselben Zeit, also während der Erzeugung eines Datenimpulses durch den Generator 10a, vom Ausgang des Gliedes 12 her die logische Null und vom Ausgang 4 des Verzögerungsgliedes 2 her die logische Eins. Demzufolge ist auch am Ausgang des Gliedes 14 während der Dauer eines Datenimpulses des Generators 10a die logische Null vorhanden, wenn am Eingang 15 dieses Gliedes der erste Pegel und damit die logische Eins wirksam ist.

Somit bewirkt eine Pegeländerung am Eingang E vom ersten zum zweiten Pegel die Aussendung eines Datenimpulses durch den Generator 10a, der während seiner Dauer zu einer Abschaltung der Strahlungsaussendung durch eine Diode 17 führt.

Findet dagegen am Eingang E ein Pegelwechsel vom zweiten zum ersten Pegel des Binärsignales statt, dann treffen an den Eingängen des Gliedes 13 die logische Null mit der logischen Null zusammen, so daß das Glied 13 als Stromquelle für die Diode 17 wirksam bleibt. An den Eingängen des Gliedes 14 sind während eines Datenimpulses (Generator 10b) die logische Null (Eingang 15) und vom Glied 12 her, während der Dauer eines Datenimpulses, ebenfalls die logische Null vorhanden. Der Ausgang des Gliedes 14 befindet sich daher im Zustand der logischen Eins, so daß also bei einem Wechsel des Binärsignales vom zweiten zum ersten Pegel ein Datenimpuls erzeugt wird, der für die Dauer des Datenimpulses durch den Zustand maximaler Strahlungsintensität der Diode 17 repräsentiert wird.

Werden weder Daten- noch Erneuerungsimpulse von der Schaltungsanordnung abgegeben, dann speist Glied 13 die Diode mit mittlerem Strom, so daß diese mit mittlerer Intensität strahlt.

0114322

Dauert der Zustand des zweiten Pegels des Binärsignals
am Eingang E für längere Zeit an, so ist am Ausgang 4 des
Verzögerungsgliedes 2 der erste Pegel wirksam und damit
an den Eingängen 15 der Glieder 13 und 14 die logische Eins
vorhanden. Von dem Erneuerungsimpulsgenerator 8 abgegebene
Impulse gelangen daher über das UND-Glied 7, das OR-Glied 11
bzw. das NOR-Glied 12 als logische Eins bzw. logische Null
zu den Gliedern 13 und 14. Am Ausgang des Gliedes 13 ist
infolgedessen während der Dauer eines Erneuerungsimpulses
die logische Null vorhanden, ebenso am Ausgang des Gliedes 14.

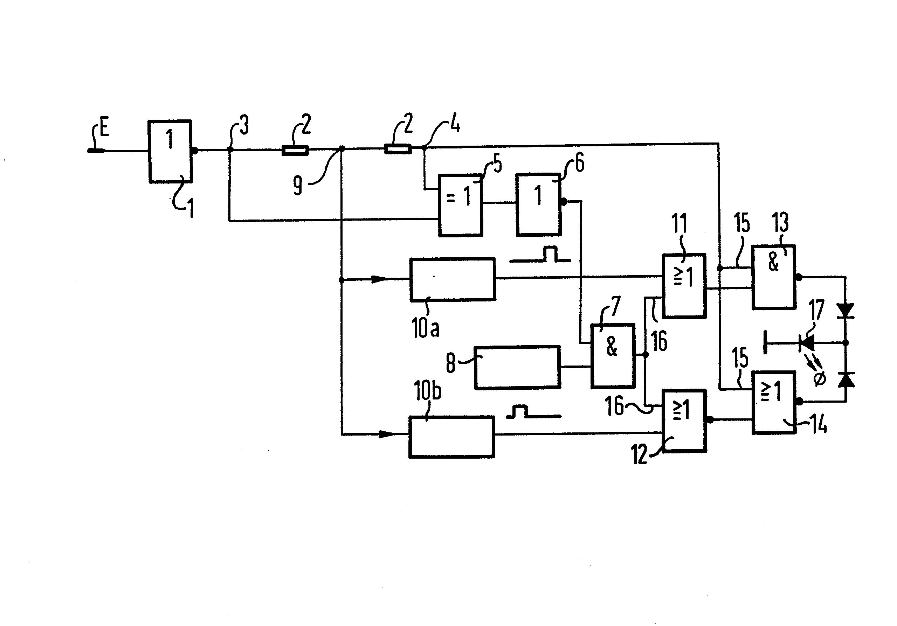

Somit ergibt sich, daß die aus dem in der Figur dargestellten Schaltbild hervorgehende Schaltungsanordnung mit der
Folgefrequenz des Erneuerungsimpulsgenerators Erneuerungsimpulse abgibt, die in ihrer Polarität jeweils mit der
Polarität des zuletzt ausgesandten Datenimpulses übereinstimmen. Tritt eine Pegeländerung im Binärsignal auf, so
wird durch die Schaltunganordnung ein Datenimpuls abgegeben, der jeweils eine zum vorausgegangenen Datenimpuls entgegengesetzte Polarität besitzt. Während der Aussendung
eines Datenimpulses ist der Erneuerungimpulsgenerator gesperrt, so daß störende Kollisionen zwischen der Aussendung eines Erneuerungsimpulses und der Aussendung eines
Datenimpulses sicher vermieden werden. Zwar wird die Aussendung eines Datenimpulses jeweils um die Verzögerungszeit
des Zeitgliedes 2 zeitlich gegen eine Pegeländerung des
Binärsignals versetzt, dies gilt jedoch für alle Datenimpulse, so daß jedenfalls kein Jitter der Anstiegsflanken der
Datenimpulse auftreten kann. Jeder von den Generatoren 10a,
10b vorgegebene Datenimpuls muß dabei eine solche zeitliche Länge haben, daß er noch an den entsprechenden Eingän-

0114322

gen der Glieder 13 und 14 wirksam ist, wenn der jeweils neue Pegel am Ausgang 4 auftritt, weil lediglich während der Koinzidenzzeit der Generatorausgangssignale mit dem jeweils neuen Pegel ein Datenimpuls durch die Diode 17 ausgesandt wird.

4 Patentansprüche

1 Figur

Patentansprüche

1. Verfahren zur Umsetzung eines zwischen einem ersten und einem zweiten Pegel wechselnden Binärsignals in ein Pulscodesignal, das einen Datenimpuls mit einer ersten Polarität aufweist, wenn das Binärsignal von dem ersten zum zweiten Pegel wechselt, und einen Datenimpuls mit einer zweiten Polarität, wenn sich das Binärsignal vom zweiten zum ersten Pegel ändert, sowie Erneuerungsimpulse zwischen zwei Datenimpulsen, jeweils mit der Polarität des zuletzt aufget-retenen Datenimpulses,
d a d u r c h   g e k e n n z e i c h n e t, daß die Erneuerungsimpulse unabhängig von den Pegeländerungen des Binärsignals mit einer bestimmten Pulsfolgefrequenz erzeugt werden, daß die einzelnen Datenimpulse jeweils gegenüber dem Zeitpunkt des Auftretens einer Pegeländerung im Binärsignal um die gleiche Zeitspanne verzögert erzeugt werden, und daß von jeder Pegeländerung des Binärsignales ein mit dem Zeitpunkt der Pegeländerung beginnendes Sperrsignal zur ausgangsseitigen Verriegelung eines Erneuerungsimpulsgenerators für eine vorbestimmte Dauer abgeleitet wird.

2. Schaltungsanordnung zur Durchführung des Verfahrens nach Anspruch 1,
d a d u r c h   g e k e n n z e i c h n e t , daß ein EX-OR-Glied (5) mit einem ersten Eingang an den Eingang (3) und mit einem zweiten Eingang an den Ausgang (4) eines von dem Binärsignal beaufschlagten Verzögerungsgliedes (2) angeschlossen ist, und daß das Ausgangssignal des EX-OR-Gliedes als Sperrsignal verwendet wird.

3. Schaltungsanordnung nach Anspruch 2,
d a d u r c h   g e k e n n z e i c h n e t , daß zwei zur Erzeugung der Datenimpulse vorgesehene Impulsgeneratoren (10a,10b) eingangsseitig mit einem Abgriff (9) des

0114322

Verzögerungsgliedes (2) verbunden sind.

4. Schaltungsanordnung nach Anspruch 3,
d a d u r c h   g e k e n n z e i c h n e t , daß das
Verzögerungsglied (2) über ein Negationsglied (1) von dem
Binärsignal gespeist ist, daß der Erneuerungsimpulsgenerator (8) zusammen mit dem Ausgang des einen Impulsgenerators (10a) an ein OR-Glied (11) und zusammen mit dem Ausgang des anderen Impulsgenerators (10b) an ein NOR-Glied
(12) angeschlossen ist, und daß der Ausgang (4) des Verzögerungsgliedes (2) mit dem Ausgang des OR-Gliedes (11)
an ein NAND-Glied (13) und mit dem Ausgang des NOR-Gliedes (12) an ein weiteres NOR-Glied (14) angeschlossen ist,
und daß das NAND-Glied (13) und das weitere NOR-Glied (14)
Steuerschaltungen für eine strahlungsemittierende Diode
(17) sind.